Europäisches Patentamt

European Patent Office

Office européen des brevets

(19)

(11) **EP 0 639 910 B1**

(12) **EUROPEAN PATENT SPECIFICATION**

(45) Date of publication and mention
of the grant of the patent:
**02.11.2005 Bulletin 2005/44**

(51) Int Cl.⁷: **H04L 12/56**, H04Q 11/04

(21) Application number: **93202403.7**

(22) Date of filing: **17.08.1993**

(54) **Resequencing system**

System zur Wiederherstellung der Reihenfolge

Système de remise en séquence

(84) Designated Contracting States:
**BE DE ES FR GB IT NL SE**

(43) Date of publication of application:
**22.02.1995 Bulletin 1995/08**

(73) Proprietor: **ALCATEL**
**75008 Paris (FR)**

(72) Inventor: **van Hauwermeiren, Luc Frans**
**B-9340 Wanzele (BE)**

(74) Representative:
**Narmon, Gisèle Marie Thérèse et al**
**Alcatel Bell N.V.**
**Intellectual Property Department**
**Francis Wellesplein 1**
**2018 Antwerpen (BE)**

(56) References cited:
**EP-A- 0 234 859**          **WO-A-91/02419**

**Description**

The present invention relates to a resequencing system for a cell switching network able to switch an input cell stream having an input peak cell rate from a network input to a network output, and including:

- a time stamp generator generating successive time stamp values at a rate at least equal to said input peak cell rate;
- an input circuit coupled between an inlet to which said input cell stream is applied and said network input, and controlled by said time stamp generator; and
- a resequencing unit coupled between said network output and an outlet, and submitting the cells of said input cell stream received on said network output to corresponding delays, thus providing a resequenced output cell stream at said outlet.

Such a resequencing system is already known in the art, e.g. from the published International Patent Application PCT/EP89/00941 with publication number WO 91/02419 (Henrion 17). Therein, the input circuit allocates to each of the cells of the input cell stream the time stamp value then generated by the time stamp generator, whilst the resequencing unit queues the cells received on the network output and applies them to the outlet when a second time stamp value also generated by the time stamp generator becomes equal to the sum of the first time stamp value allocated to the cell and a constant value, thereby making the total delay to which each cell is submitted between the network input and the outlet equal to this constant value, thus resequencing these cells.

In a practical implementation the input circuit and the resequencing unit are part of so-called termination link (TLK) boards, and more particularly of a TLK input board and of a TLK output board, respectively, and each such TLK board includes its own time stamp generator. This implies that the TLK input and output board time stamp generators have to be synchronized. Synchronization mechanisms to do so are well-known in the art and are no object of the invention.

Furthermore, it should be noted that these TLK input and output boards are designed for the specific peak cell rate of the input and output cell streams, respectively. Due to technological development, i.e. higher speed transmission links connected to the TLK board and higher speed TLK boards and switching networks, this peak cell rate evolves to higher values. Consequently, switching networks where the input and output peak cell rates are different become necessary and in such cases the above resequencing system is not applicable and a problem in comparing the time stamp values of the input and output board time stamp generators arises which up until now has not yet been recognized.

Indeed, as already mentioned, the TLK boards are designed for a specific peak cell rate and, with respect to the time stamp generator, this means that the rate thereof and the width or number of bits defining the number of distinct time stamp values both are function of this peak cell rate. More specifically, the rate of the time stamp generator must at least be equal to the peak cell rate since at least one time stamp value must be generated per cell in order to be able to allocate different time stamp values to different cells. On the other hand, it is clear that choosing too high a rate for the time stamp generator is of no use.

The width of the time stamp values must be such that the so-called wrap around range of the time stamp generator, i.e. the time interval during which it generates no two equal time stamp values, is at least equal to the maximum delay through the switching network so that a cell to which a specific time stamp value is allocated has already arrived at the network output before a following cell to which the same time stamp value is allocated may arrive threat, and no out-of-sequence error occurs. Hence, the width of the time stamp values must at least be equal to $\log_2 D$ where D is equal to the product of this maximum delay and the respective input or output peak cell rate, i.e. D is this maximum delay expressed in number of cells at this peak cell rate. Indeed, in that case the wrap around range, which is equal to $2^w$, where w is the time stamp value width, divided by the time stamp generator rate, is at least equal to the maximum delay.

This maximum delay is such that the probability of a cell experiencing a larger delay than this maximum delay, thereby causing an out-of-sequence error, is below a predetermined value, e.g. $10^{-22}$. To be noted that an out-of-sequence error may also occur when the delay is below a minimum delay the resequencing unit is designed for, this minimum delay being such that the probability of a cell experiencing a smaller delay than this minimum delay, thereby causing an out-of-sequence error, is below a predetermined value, e.g. $10^{-22}$. In that case, the minimum time stamp value width is equal to $\log_2(Dmax - Dmin)$, where Dmax is the maximum delay and Dmin the minimum delay both expressed in number of cells at the appropriate peak cell rate.

Thus, when the input peak cell rate is different from the output peak cell rate, the time stamp generator used for the input circuit operates at a different rate and produces time stamp values of a different width than the one controlling the resequencing unit. Consequently, these time stamp values can not be compared to each other without problems. Indeed, when e.g. the cell stream is applied to the inlet at an input peak cell rate of 4 Mcells per second whereas the output peak cell rate is 1 Mcell per second and the above maximum delay is 200 μsec, then the width of the time stamp values used in the input circuit is e.g. equal to 10 bits, whereas the one for the resequencing unit is 8 bits, and the time stamp generator rates are e.g. equal to 4 MHz and 1 MHz, respectively. The necessary requirement for avoiding out-of-sequence errors is that within the wrap around range of the first time stamp generator no more than the maximum number of cells able to be output from the network output are applied to the network input. However, delimiting the 10 bit time stamp value to its 8 least significant bits causes this wrap around range to be effectively divided by four thereby giving rise to out-of-sequence error problems. In other words, different cells with 10 bit time stamp values only differing in their two most significant bits may arrive out of sequence at the output, yet the time stamp values may be indistinguishable, or, even worse, the order of the time stamp values may be reversed (e.g. 1100000000 > 0011111111, yet 00000000 < 11111111).

In order to solve this out-of-sequence error problem, the 10 bit time stamp value may be delimited to its 8 most significant bits so that the wrap around range of the time stamp generator remains the same. However, in that case, when consecutive 10 bit time stamp values only differing in their two least significant bits are delimited to their 8 most significant bits, identical 8 bit time stamp values are obtained, thus making these 10 bit time stamp values no longer distinguishable.

Therefore, an object of the present invention is to provide a resequencing system of the above known type which resequences the cells received on the network output but wherein problems brought about by different input and output peak cell rates are solved.

According to the invention, this object is achieved due to the fact that said cell stream is output at an output peak cell rate different from said input peak cell rate, that said resequencing unit is associated to a second time stamp generator generating successive second time stamp values at a rate at least equal to said output peak cell rate, that said input circuit allocates to each of the cells of said input cell stream an adapted time stamp value equal to the sum of a said time stamp value then generated by said first time stamp generator and a variable virtual delay, and such that consecutive adapted time stamp values allocated to immediately consecutive cells differ by a time delay equal to at least the inverse of said output peak cell rate, and that said resequencing unit resequences said cells by subjecting them to an additional variable time delay which is such that the total delay of said cells between said inlet and said outlet is equal to the sum of said virtual delay allocated thereto and a predetermined constant value.

In this way, since for consecutive cells 1 and 2:

$$\text{tout}_{1,2} = \text{tin}_{1,2} + \text{vd}_{1,2} + A,$$

and

$$\text{tin}_2 + \text{vd}_2 - (\text{tin}_1 + \text{vd}_1) \geq 1/\text{opcr},$$

where:
$\text{tout}_i$ is the second time stamp value generated by the second time stamp generator when cell i is forwarded to the outlet;
$\text{tin}_i$ is the first time stamp value generated by the first time stamp generator when cell i is applied to the inlet;
$\text{vd}_i$ is the virtual delay allocated to cell i;
$\text{tin}_i + \text{vd}_i$ is the adapted time stamp value allocated to cell i;
A is the predetermined total value; and
opcr is the output peak cell rate,
it follows that:

$$\text{tout}_2 - \text{tout}_1 \geq 1/\text{opcr}.$$

On the other hand, $\text{rtg2} \geq \text{opcr}$, where rtg2 is the rate at which the second time stamp values are generated. Hence, $\text{tout}_2 - \text{tout}_1 \geq 1/\text{rtg2}$, which means that different cells are output at different second time stamp values and, thus, can be distinguished.

To be noted that in case no virtual delay would have been added to the first time stamp value in order to obtain the adapted time stamp value, it would follow that:

$$\text{tout}_2 - \text{tout}_1 \geq 1/\text{ipcr},$$

where ipcr is the input peak cell rate.

In that case, there is no guarantee that consecutive cells correspond to, i.e. are applied to the outlet at, different second time stamp values.

To be noted that since the wrap around range of the first time stamp generator is not changed no out-of-sequence error problems are introduced.

Another characteristic feature of the present invention is that said adapted time stamp value allocated to said cell arriving at said input is set equal to the maximum of said time stamp value then generated by said first time stamp generator and an earliest time, which thereupon is set to the sum of said adapted time stamp value and a spacing value not less than the inverse of said output peak cell rate.

Thus, the virtual delay is equal to the difference between the earliest time and the first time stamp value then generated if this difference is positive, and else is equal to zero. The earliest time indicates the time until when to cells applied to the inlet adapted time stamp values different from the first time stamp value then generated, i.e. increased with a non-zero virtual delay, are allocated. Indeed, when the first time stamp value generated at cell arrival is larger than the earliest time, the adapted time stamp value is set equal to this first time stamp value. Furthermore, since consecutive earliest time stamp values differ by at least the spacing value, this spacing value is also the minimum difference between consecutive adapted time stamp values and thereby is the minimum time between consecutive cells forwarded to the outlet. Indeed, this minimum time is equal to: $tout_2 - tout_1 = t_2 + vd_2 - (t_1 + vd_1)$, with the symbols used above, and where the right hand side of the equation is equal to the difference between consecutive adapted time stamp values.

Yet another characteristic of the present invention is that said first mentioned and second time stamp values are represented by binary numbers with predetermined first and second numbers of bits, respectively, that said spacing value is represented by a binary number with a predetermined third number of bits, and that a said cell is subjected to said additional variable time delay by being supplied to an output terminal of said switching system only when a said second time stamp value is equal to the sum of said predetermined total value and a value of said second number of bits of which the n most significant ones are the n most significant bits of the adapted time stamp value allocated thereto and of which the other bits are preset, n being an integer not higher than said second number and not less than the difference between said first number and said third number.

As already mentioned above, the first and second numbers correspond to the rates of the first and second time stamp generator, respectively, and to the out-of-sequence error. The integer n must be at least equal to the difference between the first and third numbers since the minimum spacing value must be such that consecutive adapted time stamp values correspond to different second time stamp values, i.e. that the sum of the adapted time stamp value delimited to its n most significant bits and the predetermined total value is different for different adapted time stamp values, thereby allowing different adapted time stamp values to be distinguished by the second time stamp generator. Hence, consecutive adapted time stamp values, having the first number of bits, and differing by at least the spacing value represented by the third number of bits, must differ in their n most significant bits which is assured when the third number is at least equal to the difference between the first number and n.

To be noted that, n being at most equal to the second number, when the first number is less than the second number it may also be less than n, in which case the third number may be zero so that the spacing value becomes equal to zero which however does not mean that consecutive adapted time stamp values may be equal since they will then be provided as consecutive first time stamp values, i.e. the difference between consecutive adapted time stamp values at least corresponds to one cell at the input peak cell rate.

Still another feature of the present invention is that n is equal to said second number.

In this way, n is set to its maximum value, so that the third number and the spacing value may be set to their minimum value. Consequently, consecutive cells input to the switching network receive consecutive adapted time stamp values with minimal difference between them. Since the cells have to be buffered at the output until the second time stamp value reaches the sum of the predetermined total value and the value derived from the adapted time stamp value, this also implies a minimal buffer time, a minimal buffer size and a minimal number of cells to be discarded.

The above mentioned and other objects and features of the invention will become more apparent and the invention itself will be best understood by referring to the following description of an embodiment taken in conjunction with the single drawing which shows a resequencing system according to the invention in connection with a switching network SN.

The switching network SN has a plurality of network inputs and network outputs of which one input, IN1, and one output, OUT1, are shown. The resequencing system includes a first time stamp generator TSG1 and a storage circuit STO both connected to a processor PROC. To each of the inputs of switching network SN an input circuit is connected, one of which, viz. IM1 connected to input IN1, is shown. IM1 furthermore has an input terminal or inlet IT1 to which cells of a cell stream are applied at an input peak cell rate. A control input of each input circuit is connected to an output of the processor PROC, which is shown for IM1. Each output of the switching network SN is connected to an input of a resequencing unit as shown for output OUT1 connected to resequencing unit RSU1. Each resequencing unit furthermore has an output connected to an output terminal or outlet, viz. OT1 for RSU1, and a clock input connected to an output of a second time stamp generator TSG2, as shown for RSU1.

This resequencing system in connection with the switching network SN is much like the one described in the published International Patent Application PCT/EP89/00941 (Henrion 17) wherein however a single time stamp generator instead of two is used. The present resequencing system is implemented on so-called termination link (TLK) boards, i.e. the first time stamp generator TSG1, the storage circuit STO, the processor PROC and the input circuit IM1 and others are implemented on a TLK input board, whereas the second time stamp generator TSG2 and the resequencing units RSU1 and others are implemented on a TLK output board. These TLK boards are designed for a specific peak cell rate, the TLK input board for a specific peak cell rate of the cell stream input to it, the TLK output board for a specific peak cell rate of the cell stream output from it. To be noted that these peak cell rates correspond to the peak bit rates allowable on respective links connected to the respective input and output terminals. Since these peak cell rates increase due to technological evolution, switching networks with input and output TLK boards operating with different respective input and output peak cell rates become necessary. Therefore, when designing a TLK board for an increased peak cell rate one must also consider the compatibility thereof with TLK boards operating at lower peak cell rates. Thus, TLK boards which are designed for different peak cell rates include time stamp generators operating at different rates and producing time stamp values of different width as will become clear hereafter. Furthermore, these time stamp values have to be inserted in time stamp fields of cells of the input cell stream and read therefrom in a way compatible to the one used in TLK boards designed for lower peak cell rates as will also become clear hereafter.

The time stamp generators TSG1 and TSG2 generate respective first and second time stamp values of a first and a second width and at a first and a second time stamp rate, respectively, which will be further discussed hereafter. The input circuit IM1 is of the type also used in the above mentioned patent application and inserts adapted time stamp values provided by the processor PROC in the time stamp fields of cells of the cell stream applied to the input terminal IT1 in a way similar to that described in the PCT patent application published under No WO84/00268. The resequencing unit RSU1 is of the type described in the first mentioned patent application.

The purpose of the resequencing system is to resequence cells of cell streams switched from the inputs of the switching network SN to the outputs thereof. Different such cell streams are e.g. applied to input terminal IT1, each of these cell streams being characterized by a connection reference number CRN. This connection reference number CRN is written in a connection reference field of each cell of the cell stream and identifies the cell stream to which the cell belongs and thereby the output to which the cell has to be switched. When a cell stream is to be switched e.g. from input terminal IT1 to output terminal OT1, a time stamp value is inserted by the input circuit IM1 in the time stamp field of each cell of this cell stream, consecutive cells receiving consecutive time stamp values. After being switched through SN these cells may arrive at output OUT1 out of sequence. When e.g. consecutive cells A, B and C with respective time stamp values a, b and c, are switched through SN, they may arrive at OUT1 in the sequence B, A, C because they have been subjected to different time delays in SN. The resequencing unit RSU1 then resequences the cells so that they are supplied in sequence (A, B, C) to output terminal OT1.

The input link connected to input terminal IT1 is a link with a peak bit rate of 2.4 Gbit/sec. With cells of 53 bytes, i.e. 424 bits, this corresponds to a peak cell rate of approximately 5.7 Mcells/sec where 1 Mcell/sec is $10^6$ cells/sec, i.e. 1 cell per 0.17μsec. Therefore, the first time stamp generator TSG1 generates time stamp values which are increased by one at a rate of at least 5.7 MHz. In a practical embodiment cells are converted into so-called multi-slot cells (MSC) in the input circuit IM1 which are then switched through the switching network SN and reconverted into cells in the resequencing unit RSU1. Each cell of the cell stream is converted into such an MSC consisting of 8 slots of 68 bits each, which are then applied to SN at a rate of 155.52 Mbit/sec. Thus, one slot takes up about 0.437 μsec and one MSC about 3.498 μsec. The time stamp values needed for resequencing are written in a time stamp field of a slot of the MSC. In order to be able to provide different time stamp values to different cells input to the input circuit IM1 and considering the fact that the easiest implementation of the time stamp generator TSG1 implies the use of a time stamp generator rate which is a multiple of the slot rate of 2.28 Mslot/sec corresponding to the above 155.52 Mbit/sec, the latter generator rate is chosen equal to an increment of 1 per 1/4 slot, i.e. an increment of 1 every 0.11 μsec which indeed is less than the 0.17 μsec a cell takes. Thus, this generator rate is 9.15 MHz. The width of the time stamp values, i.e. their number of bits, is determined by the maximum delay in the switching network SN expressed in number of slots at the above slot rate. When this maximum delay is e.g. equal to 150 slots, i.e. 65.6 μsec, the width of the time stamp values generated by TSG1 must at least be equal to 10 bits. Thereby, the wrap around range of TSG1 corresponds to 256 (= $2^{10}$ increments/4 increments per slot) slots, i.e. 111.8 μsec.

Likewise, the output link is one with a peak bit rate of 622 Mbit/sec, corresponding to 1 cell per 0.68 μsec or 1.47 Mcell/sec. Consequently, the second time stamp generator TSG2 is only increased once per slot and produces time stamp values with a width of 8 bits.

To be noted that synchronization of the two time stamp generators means synchronizing the value represented by the 8 most significant bits of the 10 bit time stamp value to the 8 bit time stamp value. However, this synchronization is no object of the invention and is therefore not further described.

When a cell of the cell stream arrives at IT1 it is converted into a MSC, i.e. into 8 slots of 68 bits each. In the input circuit IM1 the connection reference number CRN of the cell is read and applied to the processor PROC which thereupon fetches from the storage circuit STO an earliest time WT for that cell stream, and from TSG1 a time stamp value then generated by it. The processor PROC then compares these two values and applies to IM1 an adapted time stamp value equal to the maximum value of WT and the latter time stamp value. Furthermore, PROC calculates a new value for WT as the sum of this maximum value and a spacing value. Thus, the spacing value is equal to the minimum difference between consecutive adapted time stamp values allocated to consecutive cells of a cell stream and thereby to the minimum delay between the beginnings of consecutive cells at the output. The minimum spacing value is equal to the inverse of the output peak cell rate. The adapted time stamp value is then in the input circuit IM1 allocated to the MSC, i.e. it is written in the time stamp field thereof. WT indicates the time until which to cells of the corresponding cell stream arriving at one of the input terminals an adapted time stamp value different from the one then generated by TSG1 is allocated. For each cell stream applied to the input terminals a different value of WT is stored in STO. WT is initialized to zero when the resequencing system is powered on or when the first cell of a new cell stream is received at an input terminal thereof.

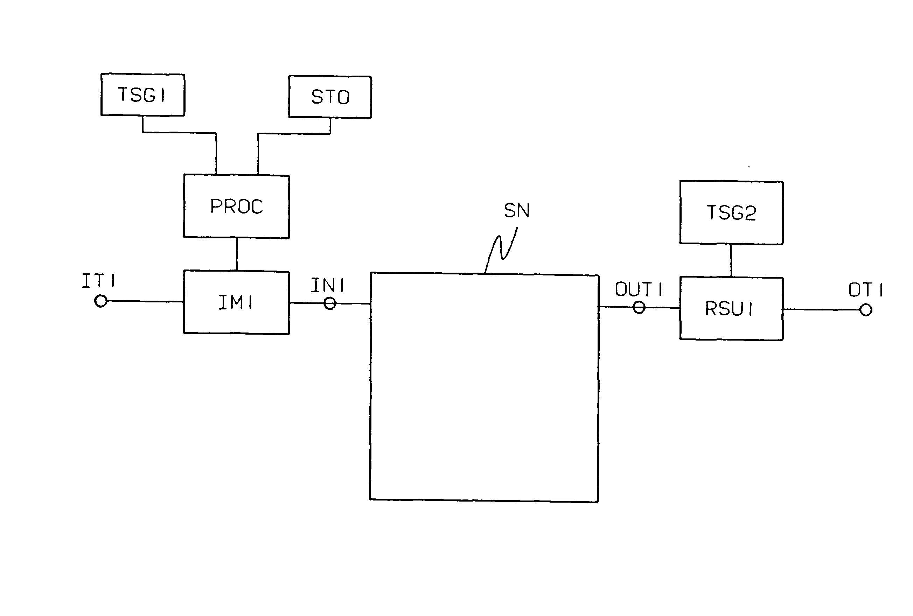

When the MSC arrives at the output OUT1 of SN, its time stamp field is read by the resequencing unit RSU1. However, of the 10 bit time stamp value included in the MSC only the 8 most significant bits are considered. Then, this 8 bit modified time stamp value is used as an indication to subject the MSC to an additional delay so that its total delay between input terminal IT1 and output terminal OT1 is equal to a predetermined total value whereby a resequenced output cell stream is applied to OT1. This additional delay may be provided as in the first above mentioned patent application, more specifically as in either of Figs 2 to 4 thereof. In brief, the MSC is written in a buffer included in the resequencing unit RSU1 at a location having an address corresponding to this 8 bit modified time stamp value, and is periodically read out under the control of time stamp values provided by the second time stamp generator TSG2, the buffer being read in increasing order of its addresses. Thereby, the predetermined total delay the MSC is subjected to is equal to the offset between the read and write addresses for each location, i.e. is the difference between a second time stamp value provided by the second time stamp generator TSG2 and indicating a buffer location a MSC is then read from, and the adapted time stamp value allocated to this MSC and indicating this buffer location. When the MSC has been read from the buffer it is converted into a cell and applied to an output buffer also included in the resequencing unit RSU1 from where it is output to an output link connected to the output terminal OT1 at the output peak bit rate.

Thus, when a not adapted time stamp value has been allocated to a MSC, i.e. when the time stamp value provided by the first time stamp generator TSG1 at arrival of the cell later converted to this MSC was greater than the corresponding earliest time WT, then the total delay this MSC is subjected to is equal to the predetermined total value, whereas otherwise it is equal to the sum of the predetermined total value and a virtual delay equal to the difference between WT and the time stamp value generated by TSG1 at cell arrival.

A practical algorithm for calculating the adapted time stamp value to be allocated to a cell arriving is now shown and described hereinafter.

Herein, *TSV* is the time stamp value generated by the first time stamp generator TSG1 upon arrival of a cell then converted into the multi-slot cell MSC, and CRN is the connection reference number allocated to the cell. *Space* is the above spacing value, *ATSV* indicates the adapted time stamp value to be allocated to MSC, and *Status* is a parameter indicating whether the above algorithm is active (*A*) or non-active (*NA*). Here, active means that *TSV* is less than the earliest time *WT*. When *TSV* becomes greater than *WT* the algorithm switches to its non-active state and remains there until a new cell arrives in which case the algorithm switches back to its active state where it remains until *TSV* becomes again greater than *WT*. This switching between the active and the non-active state is performed by a reset mechanism running in background which cyclically tests all values of CRN and which is discussed hereafter. *N* is the maximum number of cells delayed at the same time in the resequencing unit buffer mentioned above.

```
MSC :  TSV & CRN
              ↓
         if Space = 1          ————— yes —————▶    ATSV := TSV
              ↓ no                                  MSC to SN


         if Status = A         ————— no  —————▶    Status := A
              ↓ yes                                     ↓


      if WT − TSV > N*Space     ————— yes —————▶    ATSV := TSV
                                                    WT := TSV + Space
              ↓ no                                  MSC to SN


      if WT − TSV = N*Space     ————— yes —————▶    Alarm
              ↓ no                                  discard cell


         ATSV := WT
      WT := WT + Space
         MSC to SN
```

When a cell arrives at the input terminal IT1, its connection reference number CRN is read, the time stamp value $TSV$ then generated by TSG1 is fetched from TSG1, and the cell is converted into a MSC. Then, from the storage circuit STO a number of parameters concerning CRN is read, viz. $Status$, $Space$, $N$ and $WT$. If $Space$ equals 1 the minimum difference between consecutive adapted time stamp values allocated to consecutive cells of a cell stream is 1 so that no spacing is necessary, and the adapted time stamp value $ATSV$ is set to $TSV$ and MSC is sent to the switching network SN. If $Space$ does not equal 1 spacing is necessary. If in that case $Status$ is $NA$ (non-active), it is set to $A$ (active) since a cell just arrived. Furthermore, the adapted time stamp value $ATSV$ is set to $TSV$, $WT$ is set to the sum of $TSV$ and $Space$ indicating that the adapted time stamp values allocated to cells arriving until a time $Space$ later than $TSV$ are different from the time stamp values provided by TSG1. If on the other hand $Status$ is $A$ (active) a check is first performed whether the difference between the earliest time $WT$ and $TSV$ is larger than $N * Space$. If so then $Status$ should have been non-active since this situation can only occur when $TSV$ has become greater than $WT$ and the algorithm has not yet been reset to its non-active state by the reset mechanism described hereafter. In that case, the algorithm proceeds as above. If the difference between $WT$ and $TSV$ is not greater than $N * Space$, then a check is performed as to whether this difference is equal to $N * Space$ in which case the maximum allowable number of cells is delayed wherefore the present cell is discarded and an alarm signal is generated. If the difference is not equal to $N * Space$ then the adapted time stamp value $ATSV$ is set to $WT$, thereby virtually delaying the MSC until $WT$ before being sent to the switching network SN, yet sending it to SN without delay. $WT$ is then increased by $Space$.
The above mentioned reset mechanism is now shown and discussed.

```
                    CRN
                     ↓
     if CRN = active connection     ──no──▶     CRN := +1

              ↓ yes
          if Status = A             ──no──▶     CRN := +1

              ↓ yes
   if TSV < WT <= TSV + N*Space     ──no──▶     Status := NA
                                                CRN := +1
              ↓ yes
          CRN := +1
```

This reset mechanism cyclically runs a test for all possible values of the connection reference number CRN. The expression 'CRN := +1' indicates CRN has to be increased by one and the reset mechanism is to be restarted for the new value of CRN. The *Status* is set to *NA* (non-active) only when CRN indicates an active connection of which *Status* is active (*A*) and for which either *TSV* is not less than *WT* or *WT* is larger than the sum of *TSV* and *N \* Space*.

While the principles of the invention have been described above in connection with specific apparatus, it is to be clearly understood that this description is made only by way of example and not as a limitation on the scope of the invention.

**Claims**

1. Resequencing system for a cell switching network (SN) able to switch an input cell stream having an input peak cell rate from a network input (IN1) to a network output (OUT1), and including:

   - a time stamp generator (TSG1) generating successive time stamp values at a rate at least equal to said input peak cell rate;
   - an input circuit (IM1) coupled between an inlet (IT1) to which said input cell stream is applied and said network input (IN1), and controlled by said time stamp generator (TSG1); and
   - a resequencing unit (RSU1) coupled between said network output (OUT1) and an outlet (OT1), and submitting the cells of said input cell stream received on said network output (OUT1) to corresponding delays, thus providing a resequenced output cell stream at said outlet (OT1),

   **characterized in that** said cell stream is output at an output peak cell rate different from said input peak cell rate, that said resequencing unit (RSU1) is associated to a second time stamp generator (TSG2) generating successive second time stamp values at a rate at least equal to said output peak cell rate, that said input circuit (IM1) allocates to each of the cells of said input cell stream an adapted time stamp value equal to the sum of a said time stamp value then generated by said first time stamp generator (TSG1) and a variable virtual delay, and such that consecutive adapted time stamp values allocated to immediately consecutive cells differ by a time delay equal to at least the inverse of said output peak cell rate, and that said resequencing unit (RSU1) resequences said cells by subjecting them to an additional variable time delay which is such that the total delay of said cells between said inlet (IT1) and said outlet (OT1) is equal to the sum of said virtual delay allocated thereto and a predetermined constant value.

2. Resequencing system according to claim 1, **characterized in that** said adapted time stamp value allocated to said cell arriving at said input is set equal to the maximum of said time stamp value then generated by said first time stamp generator (TSG1) and an earliest time, which thereupon is set to the sum of said adapted time stamp value and a spacing value not less than the inverse of said output peak cell rate.

3. Resequencing system according to claim 2, **characterized in that** said first mentioned and second time stamp values are represented by binary numbers with predetermined first and second numbers of bits, respectively, that said spacing value is represented by a binary number with a predetermined third number of bits, and that a said cell is subjected to said additional variable time delay by being supplied to an output terminal of said switching system only when a said second time stamp value is equal to the sum of said predetermined total value and a value of said second number of bits of which the n most significant ones are the n most significant bits of the adapted time stamp value allocated thereto and of which the other bits are preset, n being an integer not higher than said second number and not less than the difference between said first number and said third number.

4. Resequencing system according to claim 3, **characterized in that**
n is equal to said second number.

5. Resequencing system according to claim 1, **characterized in that**
it further includes:

- a storage circuit (STO) storing for each cell stream input to said switching network (SN) a current said earliest time;
- a processor (PROC) comparing said time stamp value then generated and said current earliest time, thereby indicating the maximum thereof and providing said adapted time stamp value to said input circuit (IM1).

6. Resequencing system according to claim 1, **characterized in that**
said input peak cell rate is larger than said output peak cell rate.

7. Resequencing system according to claim 2, **characterized in that**
said spacing value is equal to the inverse of said output peak cell rate.


**Patentansprüche**

1. System zur Wiederherstellung der Reihenfolge für ein Zellenvermittlungsnetz (SN), das fähig ist, einen Eingabezellenstrom, der eine Eingabespitzenzellrate aufweist, von einem Netzeingang (IN1) auf einen Netzausgang (OUT1) zu vermitteln, und umfaßt:

- einen Zeitstempelgenerator (TSG1), der aufeinanderfolgende Zeitstempelwerte mit einer Rate mindestens gleich der Eingabespitzenzellrate erzeugt;

- eine Eingangsschaltung (IM1), die zwischen einem Eingang (IT1), auf welchen der Eingabezellenstrom gegeben wird, und dem Netzeingang (IN1) gekoppelt ist und durch den Zeitstempelgenerator (TSG1) gesteuert wird; und

- eine Reihenfolgewiederherstellungseinheit (RSU1), die zwischen dem Netzausgang (OUT1) und einem Ausgang (OT1) gekoppelt ist, und auf die Zellen des Eingabezellenstromes, der am Netzausgang (OUT1) empfangen wurde, die entsprechenden Verzögerungen anwendet, folglich am Ausgang (OT1) einen Ausgabezellenstrom mit wiederhergestellter Reihenfolge bereitstellt,

**dadurch gekennzeichnet, daß** der Zellenstrom mit einer Ausgabespitzenzellrate ausgegeben wird, die von der Eingabespitzenzellrate verschieden ist, daß die Reihenfolgewiederherstellungseinheit (RSU1) einem zweiten Zeitstempelgenerator (TSG2) zugeordnet ist, der aufeinanderfolgende zweite Zeitstempelwerte mit einer Rate mindestens gleich der Ausgabespitzenzellrate erzeugt, daß die Eingangsschaltung (IM1) jeder der Zellen des Eingabezellenstromes einen angepaßten Zeitstempelwert zuweist, der gleich der Summe des Zeitstempelwertes, der anschließend durch den ersten Zeitstempelgenerator (TSG1) erzeugt wurde, und einer variablen virtuellen Verzögerung ist, und derart, daß sich aufeinanderfolgende angepaßte Zeitstempelwerte, die direkt aufeinanderfolgenden Zellen zugewiesen wurden, durch eine Zeitverzögerung unterscheiden, die gleich mindestens dem Reziprokwert der Ausgabespitzenzellrate ist, und daß die Reihenfolgewiederherstellungseinheit (RSU1) die Reihenfolge der Zellen wiederherstellt, indem sie auf sie eine zusätzliche variable Zeitverzögerung anwendet, welche derart ist, daß die Gesamtverzögerung der Zellen zwischen dem Eingang (IT1) und dem Ausgang (OT1) gleich der Summe der ihnen zugewiesenen virtuellen Verzögerung und eines vorgegebenen konstanten Wertes ist.

2. System zur Wiederherstellung der Reihenfolge nach Anspruch 1, **dadurch gekennzeichnet, daß**
der angepaßte Zeitstempelwert, der der am Eingang ankommenden Zelle zugewiesen wurde, dem Maximalwert des Zeitstempelwertes, der anschließend durch den ersten Zeitstempelgenerator (TSG1) erzeugt wurde, und einer frühesten Zeit gleichgesetzt wird, welche daraufhin auf die Summe des angepaßten Zeitstempelwertes und eines Abstandswertes, der nicht kleiner als der Reziprokwert der Ausgabespitzenzellrate ist, eingestellt wird.

3. System zur Wiederherstellung der Reihenfolge nach Anspruch 2, **dadurch gekennzeichnet, daß** der erste erwähnte und der zweite Zeitstempelwert durch Binärzahlen mit einer vorgegebenen ersten und zweiten Bitanzahl entsprechend dargestellt sind, daß der Abstandswert durch eine Binärzahl mit einer vorgegebenen dritten Bitanzahl dargestellt ist, und daß auf eine Zelle die zusätzliche variable Zeitverzögerung angewendet wird, indem sie auf eine Ausgangsklemme des Vermittlungssystems nur geführt wird, wenn ein zweiter Zeitstempelwert gleich der Summe des vorgegebenen Gesamtwertes und eines Wertes der zweiten Bitanzahl ist, von der die n höchstwertigen Bits die n höchstwertigen Bits des angepaßten Zeitstempelwertes sind, der dazu zugewiesen wurde, und von der die anderen Bits voreingestellt sind, wobei n eine ganze Zahl nicht größer als die zweite Anzahl ist und nicht kleiner als die Differenz zwischen der ersten Anzahl und der dritten Anzahl ist.

4. System zur Wiederherstellung der Reihenfolge nach Anspruch 3, **dadurch gekennzeichnet, daß** n gleich der zweiten Anzahl ist.

5. System zur Wiederherstellung der Reihenfolge nach Anspruch 1, **dadurch gekennzeichnet, daß** es außerdem beinhaltet:

    - eine Speicherschaltung (STO), die für jeden Zellenstrom, der an das Koppelnetz (SN) eingegeben wurde, eine aktuelle früheste Zeit speichert;

    - einen Prozessor (PROC), der den Zeitstempelwert, der anschließend erzeugt wurde, und die aktuelle früheste Zeit vergleicht, auf diese Weise den Maximalwert davon angibt und den angepaßten Zeitstempelwert an die Eingangsschaltung (IM1) bereitstellt.

6. System zur Wiederherstellung der Reihenfolge nach Anspruch 1, **dadurch gekennzeichnet, daß** die Eingabespitzenzellrate größer als die Ausgabespitzenzellrate ist.

7. System zur Wiederherstellung der Reihenfolge nach Anspruch 2, **dadurch gekennzeichnet, daß** der Abstandswert gleich dem Reziprokwert der Ausgabespitzenzellrate ist.

**Revendications**

1. Système de remise en séquence d'un réseau de commutation par cellule (SN) capable de commuter un flux de cellule d'entrée possédant une vitesse de cellule d'entrée de pointe entre une entrée de réseau (IN1) et une sortie de réseau (OUT1), et comprenant :

    - un générateur d'estampilles (TSG1) générant des valeurs d'estampilles successives à une vitesse au moins égale à ladite vitesse de cellule d'entrée de pointe ;
    - un circuit d'entrée (IM1) couplé entre une embase d'entrée (IT1) à laquelle ledit flux de cellule d'entrée est appliqué et ladite entrée de réseau (IN1), et contrôlé par ledit générateur d'estampilles (TSG1) ; et
    - une unité de remise en séquence (RSU1) couplée entre ladite sortie de réseau (OUT1) et une embase de sortie (OT1), et soumettant les cellules dudit flux de cellule d'entrée reçu sur ladite sortie de réseau (OUT1) à des décalages correspondants, fournissant ainsi un flux de cellule de sortie remis en séquence au niveau de ladite embase de sortie (OT1),

    **caractérisé en ce que** ledit flux de cellule est transmis à une vitesse de cellule de sortie de pointe différente de ladite vitesse de cellule d'entrée de pointe, **en ce que** ladite unité de remise en séquence (RSU1) est associée à un second générateur d'estampilles (TSG2) générant des secondes valeurs d'estampilles successives à une vitesse au moins égale à ladite vitesse de cellule de sortie de pointe, **en ce que** ledit circuit d'entrée (IM1) affecte à chacune des cellules dudit flux de cellule d'entrée une valeur d'estampille adaptée égale à la somme d'une dite valeur d'estampille générée par ledit premier générateur d'estampilles (TSG1) et d'un décalage virtuel variable, et **en ce que** les valeurs d'estampilles adaptées consécutives affectées aux cellules immédiatement consécutives diffèrent selon un décalage temporel égal au moins à l'inverse de ladite vitesse de cellule de sortie de pointe, et **en ce que** ladite unité de remise en séquence (RSU1) remet en séquence lesdites cellules en les soumettant à un décalage temporel variable supplémentaire qui est tel que le décalage total desdites cellules entre ladite embase d'entrée (IT1) et ladite embase de sortie (OT1) est égal à la somme dudit décalage virtuel affecté à celles-ci et d'une valeur constante prédéterminée.

2. Système de remise en séquence selon la revendication 1, **caractérisé en ce que**
ladite valeur d'estampille adaptée affectée à ladite cellule arrivant au niveau de ladite entrée est définie comme étant égale au maximum de ladite valeur d'estampille générée par ledit premier générateur d'estampilles (TSG1) à un moment antérieur, auquel elle est définie comme étant la somme de ladite valeur d'estampille adaptée et d'une valeur d'espacement non inférieure à l'inverse de ladite vitesse de cellule de sortie de pointe.

3. Système de remise en séquence selon la revendication 2, **caractérisé en ce que**
lesdites première et seconde valeurs d'estampilles mentionnées sont représentées par des nombres binaires ayant un premier et un second nombre de bits prédéterminés, respectivement, **en ce que** ladite valeur d'espacement est représentée par un nombre binaire ayant un troisième nombre de bits prédéterminé, et **en ce que** ladite cellule est soumise audit décalage temporel variable supplémentaire en étant fournie à une borne de sortie dudit système de commutation uniquement lorsque ladite seconde valeur d'estampille est égale à la somme de ladite valeur totale prédéterminée et d'une valeur dudit second nombre de bits dont les n bits les plus significatifs sont les n bits les plus significatifs de la valeur d'estampille adaptée affectée à ceux-ci, et dont les autres bits sont présents, n étant un entier non supérieur audit second nombre et non inférieur à la différence entre ledit premier nombre et ledit troisième nombre.

4. Système de remise en séquence selon la revendication 3, **caractérisé en ce que**
n est égal audit second nombre.

5. Système de remise en séquence selon la revendication 1, **caractérisé en ce qu'**il comprend en outre :

- un circuit de stockage (STO) stockant pour chaque flux de cellule transmis audit réseau de commutation (SN) un moment antérieur ;
- un processeur (PROC) comparant ladite valeur d'estampille générée et ledit moment antérieur, indiquant ainsi le maximum de celle-ci et fournissant ladite valeur d'estampille adaptée audit circuit d'entrée (IM1).

6. Système de remise en séquence selon la revendication 1, **caractérisé en ce que**
ladite vitesse de cellule d'entrée de pointe est supérieure à ladite vitesse de cellule de sortie de pointe.

7. Système de remise en séquence selon la revendication 2, **caractérisé en ce que**
ladite valeur d'espacement est égale à l'inverse de ladite vitesse de cellule de sortie de pointe.

EP 0 639 910 B1